# EUROPEAN PATENT SPECIFICATION

(11) **EP 4 233 081 B1**
(45) Date of publication and mention of the grant of the patent: **03.06.2026**
(21) Application number: 21794858.7
(22) Date of filing: 20.10.2021
(51) Int. Cl.: H01F 6/02, G21B 1/05, H01F 6/06, H01F 27/32, H02H 7/00

(54) **HIGH TEMPERATURE SUPERCONDUCTOR FIELD COIL**
HOCHTEMPERATUR-SUPRALEITER-FELDSPULE
BOBINE DE CHAMP SUPRACONDUCTRICE À HAUTE-TEMPÉRATURE

(30) Priority: 20.10.2020 GB 202016618
(43) Date of publication of application: 30.08.2023
(73) Proprietor: Tokamak Energy Ltd, Abingdon, Oxfordshire OX14 4SD (GB)
(72) Inventor: SLADE, Robert, Abingdon Oxfordshire OX14 4SD (GB); BATEMAN, Rod, Abingdon Oxfordshire OX14 4SD (GB); VAN NUGTEREN, Jeroen, Abingdon Oxfordshire OX14 4SD (GB)
(74) Representative: Marks & Clerk LLP
(86) International application number: PCT/EP2021/079107
(87) International publication number: WO 2022/084398

(56) References cited:
- EP-A1- 3 346 475
- WO-A1-2020/130522
- AU-A1- 2019 214 510
- KR-A- 20200 050 818
- US-A1- 2006 176 132
- US-A1- 2019 009 903
- US-A1- 2019 252 104
- HUU LUONG QUACH ET AL: "Electrical and thermal analyses of a second generation high temperature superconducting magnet with vanadium III oxide and Kapton polyimide film insulation materials under an over-pulse current", SUPERCONDUCTOR SCIENCE AND TECHNOLOGY, IOP PUBLISHING, TECHNO HOUSE, BRISTOL, GB, vol. 32, no. 6, 9 May 2019 (2019-05-09), pages 65006, XP020334713, ISSN: 0953-2048, [retrieved on 20190509], DOI: 10.1088/1361-6668/AB11B2
- HEYER O ET AL: "Measurements of thermodynamic and transport properties of EuC_2: a low-temperature analogue of EuO", ARXIV.ORG, CORNELL UNIVERSITY LIBRARY, 201 OLIN LIBRARY CORNELL UNIVERSITY ITHACA, NY 14853, 4 March 2011 (2011-03-04), XP080542408, DOI: 10.1088/1367-2630/13/11/113041
- GREEN MICHAEL ANTHONY ET AL: "Protection of Large Insulated React and Wind HTS Solenoids and Toroidal Coils", IEEE TRANSACTIONS ON APPLIED SUPERCONDUCTIVITY, IEEE, USA, vol. 29, no. 5, 1 August 2019 (2019-08-01), pages 1 - 7, XP011720380, ISSN: 1051-8223, [retrieved on 20190419], DOI: 10.1109/TASC.2019.2893738

## Description

### Field of the Invention

The present invention relates to high temperature superconductor (HTS) field coils.

### Background

The challenge of producing fusion power is hugely complex. Many alternative devices apart from tokamaks have been proposed, though none have yet produced any results comparable with the best tokamaks currently operating such as JET.

World fusion research has entered a new phase after the beginning of the construction of ITER, the largest and most expensive (c15bn Euros) tokamak ever built. The successful route to a commercial fusion reactor demands long pulse, stable operation combined with the high efficiency required to make electricity production economic. These three conditions are especially difficult to achieve simultaneously, and the planned programme will require many years of experimental research on ITER and other fusion facilities, as well as theoretical and technological research. It is widely anticipated that a commercial fusion reactor developed through this route will not be built before 2050.

To obtain the fusion reactions required for economic power generation (i.e. much more power out than power in), the conventional tokamak has to be huge (as exemplified by ITER) so that the energy confinement time (which is roughly proportional to plasma volume) can be large enough so that the plasma can be hot enough for thermal fusion to occur.

WO 2013/030554 describes an alternative approach, involving the use of a compact spherical tokamak for use as a neutron source or energy source. The low aspect ratio plasma shape in a spherical tokamak improves the particle confinement time and allows net power generation in a much smaller machine. However, a small diameter central column is a necessity, which presents challenges for the design of the plasma confinement magnets. High temperature superconductor (HTS) field coils are a promising technology for such magnets.

Superconducting materials are typically divided into "high temperature superconductors" (HTS) and "low temperature superconductors" (LTS). LTS materials, such as Nb and NbTi, are metals or metal alloys whose superconductivity can be described by BCS theory. All low temperature superconductors have a critical temperature (the temperature above which the material cannot be superconducting, even in zero magnetic field) below about 30 K. By contrast, the behaviour of HTS material is not described by BCS theory, and such materials may have critical temperatures above about 30 K (though it should be noted that it is the physical differences in composition and superconducting operation, rather than the critical temperature, which define HTS and LTS materials). The most commonly used HTS are "cuprate superconductors" - ceramics based on cuprates (compounds containing a copper oxide group), such as BSCCO, or ReBCO (where Re is a rare earth element, commonly Y or Gd). Other HTS materials include iron pnictides (e.g. FeAs and FeSe) and magnesium diboride (MgB₂).

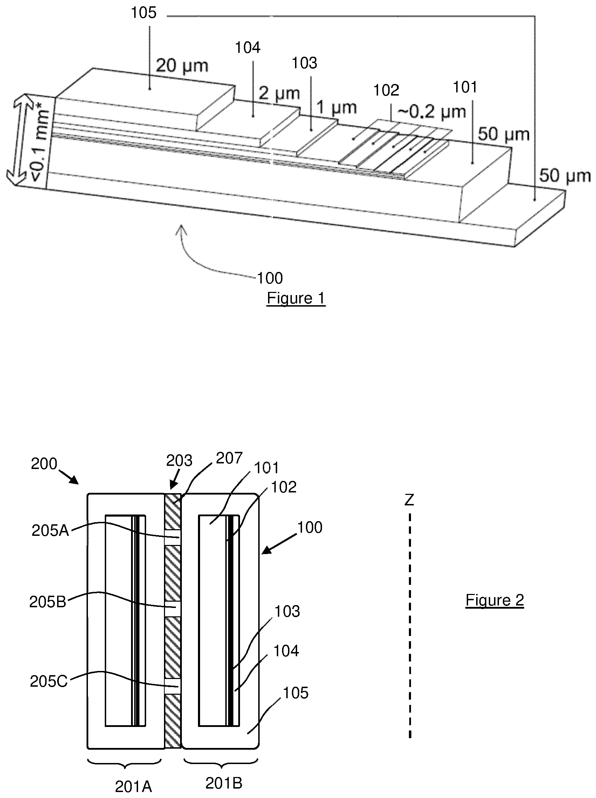

ReBCO is typically manufactured as tapes, with a structure as shown in Figure 1. Such tape 100 is generally approximately 100 microns thick, and includes a substrate 101 (typically electropolished hastelloy approximately 50 microns thick), on which is deposited by ion beam-assisted deposition (IBAD), magnetron sputtering, or another suitable technique a series of buffer layers known as the buffer stack 102,of approximate thickness 0.2 microns. An epitaxial ReBCO-HTS layer 103 (deposited by MOCVD or another suitable technique) overlays the buffer stack, and is typically 1 micron thick. A 1-2 micron silver layer 104 is deposited on the HTS layer by sputtering or another suitable technique, and a copper layer 105 is deposited on the tape by electroplating or another suitable technique, which often completely encapsulates the tape.

The substrate 101 provides a mechanical backbone that can be fed through a manufacturing line and which permits growth of subsequent layers. The buffer stack 102 provides a bi-axially textured crystalline template upon which to grow the HTS layer, and prevents chemical diffusion of elements from the substrate to the HTS which damage its superconducting properties. The silver layer 104 provides a low resistance interface from the ReBCO to the stabiliser layer, and the stabiliser layer 105 provides an alternative current path in the event that any part of the ReBCO ceases superconducting (enters the "normal" state).

In addition, "exfoliated" HTS tape can be manufactured, which lacks a substrate and buffer stack, and instead has silver layers on both sides of the HTS layer. Tape that has a substrate will be referred to as "substrated" HTS tape.

HTS tapes may be arranged into HTS cables. An HTS cable comprises one or more HTS tapes, which are connected along their length via conductive material (normally copper). The HTS tapes may be stacked (i.e. arranged such that the HTS layers are parallel), or they may have some other arrangement of tapes, which varies along the length of the cable. Notable special cases of HTS cables are single HTS tapes, and HTS pairs. HTS pairs comprise a pair of HTS tapes, arranged such that the HTS layers are parallel. Where substrated tape is used, HTS pairs may be type-0 (with the HTS layers facing each other), type-1 (with the HTS layer of one tape facing the substrate of the other), or type-2 (with the substrates facing each other). Cables comprising more than two tapes may arrange some or all of the tapes in HTS pairs. Stacked HTS tapes may comprise various arrangements of HTS pairs, most commonly either a stack of type-1 pairs or a stack of type-0 pairs and (or, equivalently, type-2 pairs). HTS cables may comprise a mix of substrated and exfoliated tape.

When describing coils in this document, the following terms will be used:
- "HTS cable" - a cable comprising one or more HTS tapes. In this definition, a single HTS tape is an HTS cable.
- "turn" - a section of HTS cable within a coil which encloses the inside of the coil (i.e. which can be modelled as a complete loop).
- "arc" - a continuous length of the coil which is less than the whole field coil
- "inner/outer radius" - the distance from the centre of the coil to the inside/outside of the HTS cables.
- "inner/outer perimeter" - the distance measured around the inside/outside of the coil.
- "thickness" - the radial depth of all of the turns of the coil, i.e. the difference between the inner and outer radius.
- "critical current" - the current at which the HTS would become normal, at a given temperature and external magnetic field, where HTS is considered to have "become normal" at a characteristic point of the superconducting transition, where the tape generates E₀ volts per metre. The choice of E₀ is to some extent arbitrary, but is usually taken to be 10 or 100 microvolts per metre.
- "critical temperature" - the temperature, T_{c}, at which the HTS would become normal, at a given magnetic field and current (strictly, the term "critical temperature" is formally defined for zero magnetic field, but the term is used more generally herein for convenience).
- "peak critical temperature" - the temperature at which the HTS would become normal given no external magnetic field, and negligible current.

The generation temperature of an HTS material refers to the temperature at which the HTS material generates a significant voltage by turning normal (i.e. ceases to be considered superconducting). In particular, the generation temperature is the temperature at which the critical electric field E₀ (in V/m) is generated by a transport current I₀ flowing in a tape. As mentioned above, E₀ is a chosen threshold and defines the critical current I_{c}, so that I₀= I_{c} when the critical electric field E₀ is generated. The generation temperature therefore depends on a number of factors that affect the critical current, including the local magnetic field strength (B), and the angle (theta) that the magnetic field makes with the c-axis of the HTS material. The generation temperature also depends on the HTS superconductor n-value, which characterises how sharply the transition from superconducting to normal behaviour occurs. Typical generation temperatures of around 35 K are found for ReBCO material in an HTS field coil 200 in which the current is around 80% of the critical current (I_{c}) and the magnetic field strength is around 20 T.

A superconducting magnet is formed by arranging HTS cables (or individual HTS tapes, which for the purpose of this description can be treated as a single-tape cable) into coils, either by winding the HTS cables or by providing sections of the coil made from HTS cables and joining them together. HTS coils come in three broad classes:
- Insulated, having electrically insulating material between the turns (so that current can flow only in a "spiral path" through the HTS cables).
- Non-insulated, where the turns are connected radially, as well as along the cables (e.g. by connecting the copper stabilising layers of the HTS cables).
- Partially insulated, where the turns are connected radially with a controlled resistance, either by the use of materials with a high resistance (e.g. compared to copper), or by providing intermittent insulation between the coils.

Non-insulated coils can also be considered as the low-resistance case of partially insulated coils. Partially insulated field coils are described in WO2019150123.

HTS field coils are generally designed to operate with all the HTS tapes in all turns running at less than their local critical current, I_{c}, which varies around the coil, due to the inhomogeneous magnetic field, B, and coil temperature, T. However, various fault conditions can cause HTS tape currents to exceed the critical current:
- Cooling failure, increasing T (locally or globally) and thereby reducing I_{c}.
- Transient increase in transport current, I₀, e.g. a power supply over-current fault.
- Damage to the HTS material (for example, due to stress cracking, fatigue from thermal cycling or energization cycling of the magnet, or, in a nuclear fusion device, radiation induced degradation, such as can be caused by neutron bombardment or runaway electrons).
- Localized energy deposition that is sufficient to cause a thermal runaway. This "minimum quench energy" is of order of 10 J, and it may be possible for plasma disruptions to dump this amount of energy in the HTS magnets, either inductively or via radiation (e.g. runaway electrons).

If the current in any tape exceeds the critical current I_{c}, a voltage will be developed in the HTS material layer which can drive transport of some of the current into the metal layers of the tape (principally the copper layer, which has a much lower resistance than the Hastelloy substrate). Current can also share into the "spare I_{c} capacity" of the other tapes within that turn. Current passing between tapes via the layers of "normal" (i.e. resistive) conductor generates heat and reduces the local critical current I_{c} further. Eventually, all the tapes within the affected turn of the HTS field coil in the vicinity of the original defect turn normal, typically within timescales measured in milliseconds to seconds, depending on the stacked tape cable materials mix and geometry.

The region of the HTS tape initially affected by a fault condition is known as a "hotspot". Early detection of hotspots is important so that damage to the HTS magnet can be avoided by "quenching" the magnet and dissipating its energy. Various approaches to detecting hotspots are known, e.g. using temperature sensors, strain sensors or voltage taps. For example, a network of sensors and voltage taps distributed around the coils can be used to detect and identify the locations of hotspots that could lead to a damaging thermal runaway and quench. The amount of energy stored in a HTS magnet when it is operated depends on the size and shape of the magnet and is proportional to the integral of the square of magnetic flux over the volume of the magnet. Large HTS magnets are able to store huge amounts of magnetic energy, which needs to be dissipated safely and rapidly in the event of a quench.

WO2017039299 describes a superconducting coil comprising a metal-insulator transition (MIT) material layer interposed between windings of the coil. The resistivity of the MIT material decreases by a large factor for temperatures in excess of a transition temperature. When electrical current is supplied to the superconducting coil, formation of a resistive "hotspot" (i.e. a normal zone) in one of the windings may cause localised heating of the MIT material layer that raises its temperature above the transition temperature, thereby lowering its resistance and allowing electrical current in the coil to divert into neighbouring turns via the MIT material layer, bypassing the normal zone and reducing the rate at which its temperature rises.

One issue with the superconducting coils described in WO2017039299 is that the electrical resistivity of the MIT material layer may not decrease rapidly enough to avoid damage to the coil and/or to prevent run-away heat generation within the coil, leading to a quench. Another issue with existing HTS coil designs is that there is a trade-off between the turn-to-turn resistance of the coil being low enough to allow rapid transverse (radial) propagation of hotspots, or high enough that the coil can be rapidly energised/de-energised, i.e. high enough that the time constant L/R of the coil is small (L and R being the inductance and resistance of the coil). The need for a small time constant is particularly important in large, high inductance coils.

US2019/009903 describes a hypersonic aircraft having a homopolar motor with high termperature superconducting non-insulated coil magnets.

### Summary

It is an object of the present invention to provide an HTS field coil that addresses, or at least alleviates, the problems described above. Aspects of the invention are defined by the claims.

There is also provided herein a high temperature superconductor, HTS, field coil having turns comprising HTS material wound about an axis of the coil. The turns are separated from one another along a direction perpendicular to the axis by a layer of insulator material having a first resistivity at a temperature less than a generation temperature of the HTS material and a lower, second resistivity at a second temperature greater than the generation temperature of the HTS material. The HTS field coil further comprises one or more electrical conductor elements arranged to provide one or more electrically conductive pathways extending from one turn to an adjacent turn and through the layer of insulator material. In response to a voltage difference generated across the one or more electrically conductive pathways, electrical current is driven (i.e. flows) through the one or more electrical conductor elements to heat the layer of insulator material. The voltage difference may be generated, for example, by one or more "hotspots" forming (or beginning to form) in the HTS material.

Rapid heating of the electrical conductor elements by the radial electrical current, increases the temperature of the insulator material in the vicinity of the electrical conductor elements, leading to a rapid decrease in the turn-to-turn resistance for at least a portion of the coil (e.g. insulator) adjacent to the hotspot. Thereafter, radial electrical current is driven through the insulator material to turn the HTS material in the turns normal.

The second resistivity of the insulator material may be less than 0.1 of the first resistivity, preferably less than 0.01 of the first resistivity.

The insulator material may have a first, metallic phase at a temperature below a phase transition temperature and a second, insulator or semiconductor phase at a temperature above the phase transition temperature. The phase transition temperature may be less than the generation temperature of the HTS material, such that the insulator material is in the second, insulator or semiconductor, phase when the HTS field coil is operated.

Alternatively, the insulator material may have a first, insulator or semiconductor phase at a temperature below a phase transition temperature and a second, metallic phase at a temperature above the phase transition temperature, the phase transition temperature being greater than the generation temperature of the HTS material. The insulator material may be a magnetoresistive material that has an electrical resistivity that, at a temperature less than a generation temperature of the HTS material, decreases in response to an applied magnetic field, whereby the electrical resistance between the turns along the direction perpendicular to the axis decreases as electrical current is supplied to the coil.

The insulator material may be or may comprise europium dicarbide. The europium dicarbide may be non-stoichiometric with a europium to carbon atomic ratio from 1:2.0 to 1:2.6.

The insulator material may be or may comprise a vanadium oxide.

The one or more electrical conductor elements may each comprise a metal or alloy, the metal or alloy preferably comprising one or more of: copper; brass; steel; stainless steel; Hastelloy; and nickel.

The one or more electrical conductor elements may each comprise a semiconductor.

The or each electrical conductor element may extend from the one turn to the adjacent turn through the layer of insulator material.

The or each electrical conductor element may comprise an electrically conductive layer on which the layer of insulator material is provided, the layer of insulator material comprising one or more windows through which electrical contact can be made to the one turn. That is, the electrical conductor element may further comprise portions within the windows.

The electrical conductive layer may be provided between the layer of insulator material and another layer of insulator material, the other layer of insulator material comprising one or more windows through which electrical contact can be made to the adjacent turn. The or each of the windows of the other layer of insulator material may be offset from the or each of the windows of the layer of insulator material, and the or each conductive element may comprises portions within the windows.

Thus, the or each electrically conductive pathway may comprise a plurality of electrical conductor elements provided within the layer(s) of insulator material.

Instead of, or in addition to, the windows, the plurality of electrical conductor elements may be provided as a dispersion within the insulator material.

An electrical resistivity of the or each conductor element may be less than the first resistivity of the insulator material at the generation temperature of the HTS material.

At least a section of the or each electrically conductive pathway within the layer of insulator material may have a component (portion) extending in a direction perpendicular to a radius of the axis of the coil. The electrically conductive pathway may meander within the layer of insulator material.

The HTS material may be ReBCO.

The first temperature may be 25 K or less and the second temperature may be 40 K or greater.

The generation temperature of the HTS material may be the generation temperature of the HTS material in zero applied magnetic field.

The turns of HTS material may provide a primary coil and further comprising a secondary coil inductively coupled to the primary coil with a flux coupling coefficient greater than 0.5, preferably greater than 0.9.

The HTS field coil may have a dimension of greater than 50 cm, greater than 2 m or greater than 5 m.

There is provided herein a cable for carrying electrical current in a coil of a magnet. The cable comprises:
a high temperature superconductor, HTS, layer of HTS material extending along a length of the cable;
a layer of insulator material extending parallel to the HTS layer along the length of the cable, the insulator material having a first resistivity at a temperature less than a generation temperature of the HTS material and a lower, second resistivity at a second temperature greater than the generation temperature of the HTS material; and
one or more electrical conductor elements arranged to provide one or more electrically conductive pathways through the layer of insulator material from a side of the layer of insulator material in electrical contact with the HTS material to an opposing side of the layer of insulator material.

There is also provided herein an insulator tape for co-winding with a high temperature superconductor, HTS, tape comprising HTS material, to manufacture an HTS field coil according to the first aspect of the present invention, the insulator tape comprising:
a layer of insulator material having a first resistivity at a temperature less than a generation temperature of the HTS material and a lower, second resistivity at a second temperature greater than the generation temperature of the HTS material; and
one or more electrical conductor elements arranged to provide one or more electrically conductive pathways through the insulator material from one side of the layer of insulator material to an opposing side of the insulator material.

In response to a voltage difference generated across the one or more electrically conductive pathways, electrical current is driven through the one or more electrical conductor elements to heat the layer of insulator material.

According to a first aspect of the present invention there is provided a high temperature superconductor, HTS, field coil having turns comprising HTS material wound about an axis of the coil. The turns are separated from one another along a direction perpendicular to the axis by one or more layers comprising magnetoresistive material. The magnetoresistive material has an electrical resistivity that, at a temperature less than a generation temperature of the HTS material, decreases in response to an applied magnetic field, whereby the electrical resistance between the turns along the direction perpendicular to the axis decreases as electrical current is supplied to the coil.

The term magnetoresistance refers to the change in resistance of a (magnetoresistive) material in response to an applied magnetic field. It can be quantified by the relative change in the resistance (or resistivity) of the material as a function of the applied magnetic field. For example, the magnetoresistance of a material may be expressed as (*ρ*(*B*) *- ρ*(0))/*ρ*(0), in which *ρ*(*B*) is the resistivity of the material in an applied magnetic field B (e.g. 1 T) and *ρ*(0) is the resistivity of the material in zero applied magnetic field. The term colossal magnetoresistance (CMR) is used herein to describe the magnetoresistance of a material that displays an unconventionally large (or extreme) magnetoresistance, e.g. an absolute change in electrical resistivity of greater than 5% in an applied magnetic field of 1 T.

The relative decrease in electrical resistivity of the magnetoresistive material at said temperature in response to an applied magnetic field of 1 T may be greater than 5%, preferably greater than 50% and more preferably greater than 99%. The electrical resistivity of the magnetoresistive material at a temperature of 20 K may be greater than 10³ Ohm cm, preferably greater than 10⁴ Ohm cm, or more preferably greater than 10⁵ Ohm cm. The magnetoresistive material may be or may comprise europium dicarbide, EuC₂. The europium dicarbide may be non-stoichiometric with a europium to carbon atomic ratio is from 1:2.0 to 1:2.6.

The HTS material may be ReBCO.

The magnetoresistive material may have a first resistivity at a temperature less than the generation temperature of the HTS material and a lower resistivity at a second temperature greater than the generation temperature of the HTS material. The magnetoresistive material may have a first, metallic phase at a temperature below a phase transition temperature and a second, insulator or semiconductor phase at a temperature above the phase transition temperature, the phase transition temperature being less than the generation temperature of the HTS material, such that the insulator material is in the second, insulator or semiconductor, phase when the HTS field coil is operated. The temperature at which the magnetoresistive material has an electrical resistivity that decreases in response to an applied magnetic field is greater than the phase transition temperature.

The generation temperature of an HTS material refers to the temperature at which the HTS material starts to generate significant voltage by turning normal (i.e. ceases to be fully superconducting).

The turns may be formed from one or more lengths of HTS tape comprising the HTS material as a layer on a flexible substrate.

Each layer comprising the magnetoresistive material may be provided on a flexible substrate that is co-wound about the axis of the coil with the one or more lengths of HTS tape.

Each layer comprising the magnetoresistive material may have a thickness from 5 microns to 100 microns.

According to a second aspect of the present invention there is provided a high temperature superconductor, HTS, cable for winding into an HTS field coil. The cable has a stack of layers comprising a flexible substrate, a layer of HTS material and a layer of magnetoresistive material, as described above for the first aspect (e.g. europium dicarbide). The magnetoresistive material has an electrical resistivity that, at a temperature less than a generation temperature of the HTS material, decreases in response to an applied magnetic field.

According to a third aspect of the present invention there is provided an electromagnet comprising one or more HTS field coils according to the first aspect.

According to a fourth aspect of the present invention there is provided a system comprising a plasma vessel and a set of field coils for generating a magnetic field within the plasma vessel, each field coil being an HTS field coil according to the first aspect of the present invention.

According to an fifth aspect of the present invention there is provided a tokamak fusion reactor comprising an HTS field coil according to the first aspect of the present invention, wherein the HTS field coil is one of a toroidal field coil or a poloidal field coil.

According to a sixth aspect of the present invention there is provided high temperature superconductor, HTS, magnet system comprising:
a high temperature superconductor, HTS, field coil according to the first aspect of the present invention;
a detection unit configured to detect a loss of superconductivity in the HTS material of at least a portion of one of the turns of the HTS field coil;
a quench protection unit configured to transfer electrical current from the HTS field coil to an external resistive load in response to said detection.

The HTS field coil may have a radius greater than 50 cm.

The external resistive load may be a varistor (i.e. a resistor that has a resistance that depends on the applied voltage).

There is also provided herein a method of protecting a high temperature superconductor, HTS, field coil according to the first or fourth aspect of the present invention from damage following a loss of superconductivity in one or more of turns of the HTS field coil. The method comprises:
detecting a loss of superconductivity in the HTS material of at least one of the turns of the HTS field coil; and
electrically connecting the HTS field coil to an external resistive load in response to said detection.

There is also provided herein a high temperature superconductor, HTS, magnet system comprising an HTS field coil comprising: a plurality of turns comprising HTS material wound about an axis of the coil, the turns being separated from one another along a direction perpendicular to the axis by a layer of insulator material; and one or more electrical conductor elements arranged to provide respective electrically conductive pathways extending through the layer of insulator material from one turn to an adjacent turn. The HTS magnet system includes a quench protection circuit comprising a varistor connected across at least some of the turns of the HTS field coil. The varistor is configured to decrease in resistance in response to a voltage being generated across the at least some of the turns, whereby a proportion of an electrical current driven by said voltage through the one or more electrical conductor elements as compared to through the varistor is decreased as the voltage increases.

The HTS magnet system may further comprise a secondary coil inductively coupled to the HTS field coil, preferably with a flux coupling coefficient greater than 0.5, more preferably greater than 0.9.

The resistance of the varistor at zero applied voltage may be greater than the resistance of each the one or more electrical conductor elements at the generation temperature of the HTS material.

The HTS field coil may be an HTS field coil according to the first aspect of the invention described above.

The quench protection circuit may further comprise: a power supply for supplying electrical current to the HTS field coil; a detection unit configured to detect a loss of superconductivity in the HTS material of at least a portion of one of the turns of the HTS field coil; and a circuit breaker configured to disconnect the power supply from the HTS field coil in response to the detection unit detecting a loss of superconductivity in the HTS material of the at least a portion of one of the turns of the HTS field coil.

Also described herein is an HTS field coil having turns comprising HTS material wound about an axis of the coil, the turns being separated from one another along a direction perpendicular to the axis by one or more layers comprising a material having a first, metallic phase at a temperature less than a phase transition temperature and a second, insulator or semiconductor phase at a temperature greater than the phase transition temperature, the phase transition temperature being less than a generation temperature of the HTS material.

Also described herein is an HTS field coil having turns comprising HTS material wound about an axis of the coil, the turns being separated from one another along a direction perpendicular to the axis by one or more layers comprising europium dicarbide.

### Brief Description of the Drawings

Figure 1 is a schematic illustration of a known HTS tape;
Figure 2 is a schematic radial cross section view of a coil;
Figure 3A is a schematic illustration of an insulator tape;
Figure 3B is a schematic side view of the insulator tape of Figure 3A;
Figure 4 is a schematic radial cross section view of a coil according to an embodiment of the present invention;
Figure 5 is a schematic cross section view of a tokamak fusion reactor;
Figure 6 is a graph showing the results of a calculation of the energy in a toroidal field coil during dumping of the magnet energy to an external resistance;

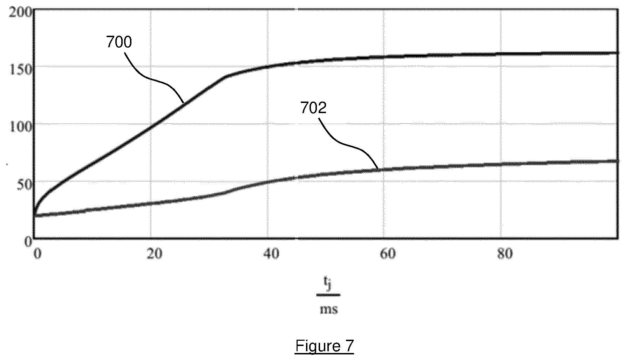

Figure 7 is a graph showing the results of a calculation of the temperature of HTS and insulation tape during dumping of the magnet energy to an external resistance; and
Figure 8 is a circuit diagram of a quench protection system.

### Detailed Description

### Partial insulation with electrical conductor elements

A field coil is proposed here, in which adjacent turns of an HTS field coil are separated from one another by a "partially insulating" layer having an electrical conductivity that is able to increase rapidly as a result of electrical current flowing between the turns during or after a hotspot is formed. The partially insulating layer comprises a layer of insulator material and electrical conductor elements that provide electrically conductive pathways through the layer of insulator material. Hotspot formation in one of the turns of the coil causes electric current to bypass the affected turn, at least to some extent, thereby causing current to flow through the conductor element(s) from the turn to an adjacent turn (or turns). The insulator material is selected as having a first resistivity at a temperature less than the generation temperature of the HTS material and a lower, second resistivity at a second temperature greater than the generation temperature of the HTS material. Resistive heating of the conductor element(s) increases the temperature of the surrounding insulator material, thereby decreasing the turn-to-turn resistance of the coil.

Figure 2 shows a radial cross section view of a coil 200 formed by winding an HTS tape 100 (in this case ReBCO tape) about an axis Z (the axis of the coil), in a similar manner to a spool of ribbon. For clarity, only two turns (windings) 201A, B are shown in the figure, but any number of windings can be used. The turns 201A,B are nested within one another to form a generally planar coil 200, often referred to as a "pancake" coil. The HTS tape 100 may be an HTS tape as described above in relation to Figure 1 (or an exfoliated version thereof). The inner perimeter of the coil 200 is circular, but can in general be any two dimensional shape, e.g. a "D" shape.

An insulator tape 203 is co-wound with the HTS tape so that each of the turns 201A, B of the HTS tape 100 are separated from one another in a radial direction (i.e. a direction that is perpendicular to and passes through the axis Z) by a turn of the insulator tape 203. The insulator tape 203 has a width (i.e. length along the Z-axis) substantially equal to that of the HTS tape (in this case 12 mm). The insulator tape 203 comprises insulator material 207 that electrically insulates the turns 201A,B from one another when the coil is operated under usual, low temperature conditions (i.e. in the absence of any hotspots). In this example, the insulator material is europium dicarbide (EuC₂), but other suitable insulator materials can also be used in addition to or instead of europium dicarbide. For example, the insulator material can be a vanadium oxide of various stoichiometries (e.g. V₂O₃, V₃O₅, V₂ₙO₂ₙ₊₁ ... VO) depending on the required temperature performance of the material. Other insulator materials that can be used, depending on requirements, include semiconductors, such as germanium, or other known metal insulator transition (MIT) materials, such as Fe₃O₄, RNiO₃ (R = La, Sm, Nd, Pr), La₁₋ₓSrₓNiO4, NiSe₁₋ₓSeₓ, and BaVS₃. Alternatively or additionally, carbides, oxides or even nitrides of other transition metals or rare earth elements may be suitable insulator materials in some cases.

Europium dicarbide is a preferred insulator material as it has high electrical resistivity at low temperatures, but much lower resistivity at high temperatures. In particular, europium dicarbide has a first resistivity at a temperature less than the generation temperature of the HTS material (ReBCO) and a much lower resistivity at a second temperature greater than the generation temperature of the HTS material (the first resistivity and the second resistivity being for europium dicarbide 207 in a constant applied magnetic field, e.g. at zero applied magnetic field). For example, the electrical resistivity of europium dicarbide (measured in zero magnetic field) has a maximum electrical resistivity of around 10⁷ Ohm cm at a temperature of 15 K (less for non-zero magnetic fields), but an electrical resistivity of less than around 1 Ohm cm at a temperature of 300 K. This behaviour allows the EuC₂ 207 to electrically insulate the turns 201A, B from one another when the coil is operated at low temperatures (e.g. temperatures below 40 K), i.e. the EuC₂ 207 substantially prevents electrical current from flowing in a radial direction between the turns, so that a high proportion (e.g. > 95%) of the current flows circumferentially around the turns. At higher temperatures, the EuC₂ 207 provides a substantially lower resistance between the turns 201A, B, thereby allowing greater current to flow radially between the turns when there is a loss of superconductivity (and hence increased electrical resistance) in the HTS material layer 103.

The insulator tape 203 further comprises copper bridges 205A-C that pass through the europium dicarbide 207 in a radial direction with respect to the coil axis Z to electrically connect the turns 201A,B. The copper bridges 205A-205C may extend uninterruptedly within the insulator tape in the length direction, such that it is arranged circumferentially around each turn of the insulator tape 203. i.e. such that it subtends at least 360 degrees about the coil axis Z. Alternatively, the copper bridges 205A-C may extend only by a short distance in the circumferential direction, i.e. each copper bridge 205A-205C fills a respective window (through hole) in the insulator material 207, and there may be copper bridges 205A-205C spaced apart circumferentially. In the latter case, there may be radial cross-sections containing no copper bridges (i.e. the insulator material 207 extends uninterruptedly from the top to bottom of the field coil in these radial cross-sections). Although only three copper bridges are visible in the radial cross section shown in Figure 2, it will be understood that there may be any number of bridges in such a cross-section. The insulator tape 203 as a whole therefore acts as a "partial" insulator at low temperatures because of the relatively high resistivity of the europium dicarbide 207 together with the relatively high conductivity of the copper bridges 205A-C.

In the event of a hotspot forming in the HTS material layer 103 of one of the turns 201A,B, at least some of the current flowing in the affected turn bypasses the hotspot and is transferred to the adjacent turn through the copper bridges 205A-C as a result of the voltage generated between the turns, i.e. the copper bridges 205A-C transfer the current radially between the turns 201A,B. The copper bridges 205A-C are rapidly heated by the radial current, which increases the temperature of the europium dicarbide 207 surrounding the copper bridges 205A-C, and leads to a rapid decrease in the turn-to-turn resistance for at least a portion of the coil 200 adjacent to the hotspot. Thereafter, the magnetic energy stored in the coil 200 drives radial current through the insulator material 207 to quickly turn the HTS material in the turns 201A,B normal. This process then continues until the HTS material becomes normal for the bulk of the coil.

The greatly reduced resistivity of the europium dicarbide 207 following heating by the copper bridges 205A-C causes at least some of the radial turn-to-turn current to flow through the europium dicarbide 207 instead, i.e. the current carried by the copper bridges 205A-C is reduced relative to the current that would have been carried if the resistivity of the europium dicarbide 207 remained very high. This reduction greatly reduces or eliminates the risk of the copper bridges 205A-C (or another part of the coil 200) being damaged or "burnt out" by very large currents flowing through the resistive material of the copper bridges 205A-C.

Limiting the current flowing in the copper bridges 205A-C is particularly important to avoid excessive heat generation because the resistance of the copper bridges 205A-C increases with temperature (e.g. by a factor of around 15 between 20 K and 200 K). These concerns are paramount for very large coils, which can store huge amounts of magnetic energy, e.g. tokamak TF coils having a height of around 6 m, which may store around 1.5 GJ of magnetic energy. Some of the problems with larger coils can be understood by considering how the properties of the coil vary as a characteristic linear dimension (e.g. radius) of the coil is increased. The stored magnetic energy rises with linear dimension cubed, but the coil's mass, which has to absorb that energy, only rises linearly or quadratically with the coil dimension. Therefore, it is crucial to ensure that that the heat during a quench is evenly distributed through the coil.

The combination of the europium dicarbide 207 and the copper bridges 205A-C greatly increases the speed at which the insulator tape 203 is able to respond to localised heating caused by a hotspot forming (or beginning to form), i.e. the rate at which the resistance of the insulator tape 203 decreases is enhanced by the copper bridges 205A-C heating the europium dicarbide 207. For existing forms of temperature dependent turn-to-turn insulation that lack copper bridges, more heat must be generated by current flowing in the cladding (e.g. the silver layer 104 or copper layer 105) of the HTS tape 100 before the insulation is heated sufficiently to cause a significant reduction in the turn-to-turn resistance of the coil. Such localised and relatively prolonged heating may lead to increased damage to the HTS tape 100. Another advantage arising from the improved (i.e. decreased) "response time" of the insulator tape 203 is that there is less time for unbalanced forces to build up between different parts of the HTS field coil 200, which may result in mechanical damage to the HTS magnet.

The turn-to-turn resistance of the HTS field coil 200 can be varied in a number of different ways, such as changing number density of the bridges 205A-C within the insulator tape 203, varying the thickness of the insulator tape 203, or using resistive materials other than copper for the bridges, such as brass, stainless steel, Hastelloy, nickel or a semiconductor material. The bridges may have a cross sectional area that is substantially constant along their lengths (i.e. along the horizontal, radial direction shown in Figure 2) and may take any shape. Increasing (or decreasing) the cross sectional area of the bridges allows the turn-to-turn resistance to be increased (or decreased) as necessary. In some cases, some of the bridges may extend to an edge of the insulator tape 203, i.e. so that each of these bridges is not surrounded by the insulator material on one side.

The length of the conductive pathways through the insulator material can also be increased by configuring the bridges 205A-C to follow a meandering path within the insulator material, e.g. a winding or "serpentine" path that loops back on itself one or more times within the insulator material. This kind of arrangement allows heat generated by the bridges to be transferred to the insulator material over a larger area compared to non-winding paths.

The metal bridges described above may be varied along the insulator tape 203 to ensure that the turn-to-turn resistance provided by the insulator tape 203 remains (at least approximately) constant for each turn.

Two coils 200 may be arranged as a "double pancake coil" with one coil 200 stacked on the other coil 200 with an insulated layer between them. Each of the two pancake coils 200 is wound in an opposite sense and the inner terminals of the coils 200 (i.e. the end of the innermost turn of each coil) connected together to allow current to be supplied to the coil by applying a voltage across the respective outer terminals of the coils 200 (i,e, the end of the outermost turn of each coil).

The insulator tape 203 may comprise a substrate on which the europium dicarbide 207 (or other insulator material) is provided as a layer, with through holes (i.e. windows) allowing the copper bridges 205A-C to pass through both the substrate and the europium dicarbide 207. The substrate may be formed from or comprise another thermally conductive material, such as copper, in order to facilitate heat transfer from the copper bridges 205A-C to the europium dicarbide 207. The substrate may also be electrically conductive, in which case, the copper bridges 205A-C may each be in electrical contact with the substrate such that through holes in the substrate are not necessary. In one example, the substrate is made of Hastelloy and has a thickness of 100 microns, whilst the EuC₂ layer 207 has a thickness of 20 microns. The thickness of the EuC₂ layer 207 can be adjusted according to the desired turn-to-turn resistance and may be from 1 micron to 100 microns, for example. Optionally, an EuC₂ layer 207 may be provided on both sides of the substrate. The EuC₂ layer(s) 207 can be formed, for example, by the reaction of elemental europium with graphite at 1673 K, as described by Wander et al., Inorg. Chem (2010) 49, 1, 312-318.

Alternatively (or additionally), rather than providing the insulator tape 203 separately from the HTS tape 100, the EuC₂ layer 207 and copper bridges 205A-C may be bonded to one side of the HTS tape 100, or even provided on both sides of the HTS tape 100, i.e. such that there are respective EuC₂ layers 207 and copper bridges 205A-C provided on each side of the HTS tape 100. A cable comprising such a tape or tapes and one or more HTS tapes 100 in a stacked arrangement (i.e. arranged such that the HTS layers in each of the tapes are parallel) can also be made. Such cables may be particularly beneficial for producing large field coils.

Another method of forming an insulator tape 203 comprises depositing a mixture of insulator material (e.g. europium dicarbide) and metal particles (e.g. copper powder) on to a substrate, such a copper layer or HTS tape 100. The metal particles are dispersed within the europium dicarbide to form miniaturised conductive "tracks" that provide conductive pathways through the europium dicarbide. This method may be readily incorporated into existing ways of manufacturing HTS tape 100, e.g. REBCO tape. The number density and/or size of the metal particles within the europium dicarbide may be non-uniform so that certain portions of the insulator tape 203 are more conductive. The number density and/or size of the metal particles may also be varied so that the insulator tape 203 provides a (substantially) constant turn-to-turn resistance when it is wound into an HTS field coil 200.

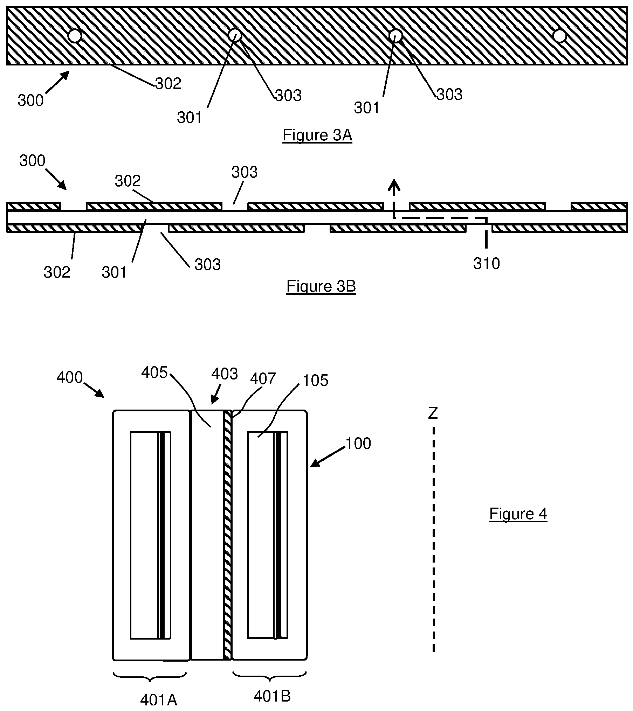

Figures 3A and 3B illustrate an insulator tape 300 in which a metal (e.g. copper) strip 301 (which can be considered a substrate, as discussed above for the insulator tape 203) is provided with a thin coating of insulator material (e.g. EuC₂) 302 on at least the sides that will face the HTS cables when a coil is wound. The insulating coating is removed (or not applied) over windows or "through holes" 303 at intervals on each side of the metal strip 301. The windows can have any shape and can optionally extend to the edges of the insulator tape 300. The location of windows 303 on either side of the metal strip 301 are staggered (i.e. the windows are offset from one another), as shown in Figure 3B, so that the path 310 for current passing from one window to another includes a portion running parallel to the length direction of the metal strip 301. This arrangement increases the resistance across the insulator tape 300 (compared to an uninsulated strip, or to a strip where the windows on each side were directly opposite each other) and leads to greater heating of the insulator material coating.

The metal strip can be soldered to the HTS cables (e.g. during winding) to ensure good electrical contact. Alternatively, contact may be achieved merely due to the pressure in the coil once wound. As a further alternative, additional electrically conductive inserts may be added into the windows, or the metal strip may have protrusions which extend into the windows. The inserts or protrusions may fill the entire window, or may fill only a portion of the window. For example, where the window is a "lane", the inserts may be provided at intervals along that lane, so that the inserts, in effect, reduce the size of the window, and can be used to tune the turn-to-turn resistance provided by the insulator tape 303.

Insulator tapes similar to the insulator tape 300 of Figure 3 may be manufactured as a flexible printed circuit board (PCB), with the insulator material (e.g. EuC₂) 302 being bonded to the metal strip by adhesive, and then etched to form the windows, with any further metal elements being bonded to the insulating coating or the metal strip as appropriate, such that they are in electrical contact with the metal strip. Alternatively the coating of insulator material may have the windows pre-cut (or be sized so as to provide "lanes" when applied to the strip), and then be bonded to the metal strip during winding by adhesive. Other manufacturing methods may also be used.

As noted above, HTS coils may be non-insulated, partially insulated or insulated, depending on the material(s) provided between adjacent turns of the HTS material. These different types of HTS coil may have significantly different behaviours following hotspot formation in part of the HTS material and different approaches are required to respond to the hotspot formation safely and effectively.

In the case of a fully insulated magnet, formation of a hotspot in a part of an HTS tape 100 causes current to bypass the normal zone in the HTS material and flow preferentially in another layer of the HTS tape or HTS cable. For example, in a magnet wound using stacked tape cable with no additional so-called "stabilizer" metal (such as copper or aluminium), the transport current flows preferentially in the copper in the outer shell of the HTS tape (if present) and the Hastelloy (or nickel-tungsten) substrate Joule heating within the other layer(s) of the HTS tape or HTS cable will cause the temperature of the hotspot to rise rapidly, typically exceeding the melting point of copper within 10-1000 milliseconds, depending on the construction of the cable and the amount of magnetic energy stored in the magnet. If enough stored magnetic energy is available, the turn will vaporise at its hottest point and a destructive arc will form, permanently damaging the magnet. This problem is particularly severe in HTS magnets because they can remain superconducting at higher temperatures (generally up to 30-60 K, depending on magnet design). At these temperatures most materials have greatly increased heat capacity compared to lower temperatures, such as 1.2-4.2 K, the temperatures at which conventional, low temperature superconducting (LTS) magnets are operated. This higher heat capacity means that a hotspot typically propagates around the turn and between adjacent turns very slowly (e.g. with a velocity of around 10-100 mm/s), and a large temperature gradient forms between the surrounding HTS material, which is still superconducting and dissipation-free, and the peak temperature of the hotspot.

These problems can be mitigated for fully insulated magnets by adding additional high conductivity normal (i.e. non-superconductor) metal (e.g. copper) to the HTS cable to reduce Joule heating and slow down the rate of temperature rise, thus allowing more time to detect the hotspot and initiate a safe shutdown of the magnet. However, large magnets require a considerable amount of additional high conductivity metal to be added to each turn to give an acceptable time window to detect a hotspot and initiate a quench. The additional metal significantly reduces the winding pack current density, i.e. the current carried by the cable divided by cross-sectional area of the cable, but serves no purpose until a hotspot occurs. Furthermore, the best metals for this purpose (copper and aluminium) have relatively low Young's moduli, so it is often necessary to encase the cable in a jacket of high strength material to withstand the high electromagnetic stresses seen, further reducing the current density of the HTS cable. These problems can be avoided using field coils such as the field coils 200, 400 described above, in which the layer(s) of insulator material between the turns of HTS tape 100 are relatively thin, e.g. having a thickness of less than 1 mm or from 5 microns to 100 microns.

In the case of the centre column of a toroidal field (TF) magnet of a compact spherical tokamak (ST), the resultant current density is typically < 50 A/mm², and certainly < 100 A/mm². However, the required average current density for a larger ST is much higher. For example, a ST with a 1.4 m major radius (R₀) and a 4 T field at R₀ requires an average current density of the order of 400 A/mm². Adding large amounts of additional conductor is therefore not practical for larger STs. Field coils such as the field coils 200described above (and also the field coils 400 described below) are therefore particularly suitable for compact spherical tokamaks.

### HTS field coils comprising magnetoresistive materials

Another solution to some of the problems described above is proposed here, in which a magnetoresistive material layer is used to provide turn-to-turn electrical insulation for an HTS coil. The electrical resistivity of the magnetoresistive material decreases in response to an applied magnetic field at a temperature that is less than a generation temperature of the HTS coil. The magnetoresistive material layer provides a high electrical resistance between the turns of the HTS coil (i.e. the coil is an "insulated" coil) when the amount of electrical current supplied to the HTS coil is low (and hence the magnetic field generated by the coil is low). However, as more current is supplied to the HTS coil, the electrical resistance of the magnetoresistive material layer decreases (the coil becomes a "non-insulated" or only "partially insulated" coil) because of the magnetic field generated by the HTS coil. This behaviour allows electrical current to be supplied to the coil rapidly during the initial stages of ramp-up (i.e. as the electrical current is raised from a low value to a higher value) and then at a lower rate as the turn-to-turn resistance of the coil decreases (and hence the ratio L/R increases) to a lower final resistance. The overall ramp-up time of the HTS coil is therefore decreased compared to other HTS coils that have the same turn-to-turn resistance as the final turn-to-turn resistance reached by the HTS coil, but which do not comprise magnetoresistive materials.

For example, supposing an HTS coil has an inductance L and that a final turn-to-turn resistance, R₁, is desired, e.g. to allow current to flow between turns if a hotspot forms in the HTS layer 103. An HTS coil comprising a magnetoresistive material layer has an initial turn-to-turn resistance, R₀ (at zero current), that is higher than the final turn-to-turn resistance, R₁. Therefore, the mean time constant of the HTS coil will be between L/R₀ and L/R₁. By contrast, an equivalent HTS coil having a constant turn-to-turn resistance, R₁, will have a larger time constant, L/R₁. Preferably, the magnetoresistive material may exhibit colossal magnetoresistance (CMR). For example, the percentage decrease in electrical resistivity of the magnetoresistive material on going from an applied magnetic field of strength 0 T to an applied magnetic field of strength 1 T may be greater than 5%.

Figure 4 shows a radial cross section view of a coil 400 which comprises a plurality of turns 401A,B of HTS tape 100. This coil is identical to the coil 200 described above with respect to Figure 2, except that the insulator tape 403 does not comprise copper bridges, i.e. the insulator tape 403 comprises an electrically conductive (e.g. copper or Hastelloy) substrate 405 and a layer of insulator material 407, e.g. europium dicarbide.

The insulator material is a magnetoresistive material, i.e. a material that exhibits magnetoresistance, a change in electrical resistivity upon application of an external magnetic field. Europium dicarbide is a preferred choice of magnetoresistive material because it exhibits so-called colossal magnetoresistance (CMR), in which is the change in electrical resistivity upon applications of large magnetic fields is enormous. For example, at a temperature of 20 K, europium dicarbide has an electrical resistivity of around 10⁷ Ohm cm in zero magnetic field, but a resistivity of around 10⁴ Ohm cm in a magnetic field of 1 T, and a resistivity of 10 to 100 Ohm cm in a magnetic field of 14 T.

The magnetoresistance of the insulator tape 403 means that electrical current can be supplied to the coil 400 rapidly at first, and then at a lower rate as the turn-to-turn resistance of the HTS coil 400 decreases in response to the magnetic field generated by the HTS field coil 400. The much lower turn-to-turn resistance when the HTS coil 400 is operated at high electric currents (i.e. high magnetic fields) also allows some sharing of the electric current between adjacent turns 401A,B of the HTS tape, which makes the HTS coil 400 more resilient against hotspot formation, as described below.

If a region of one of the turns 401A,B of the HTS tape 100 forms a "hotspot", i.e. becomes warmer than the rest of the HTS tape 100, the hotspot may spread around the turn until sufficient heat is generated to cause the HTS tape 100 to cease being superconducting, i.e. for a generation temperature of the HTS material 103 to be exceeded. However, the insulator tape 403 helps mitigate against this problem because the heat generated in the hotspot makes the insulator tape 403 adjacent to the hotspot (e.g. on either side of the hotspot) become more electrically conductive, which causes some of the current in the turn 401A,B containing the hotspot to bypass the hotspot and transfer into the adjacent turns 401A,B (i.e. the current flows in a radial direction).

As discussed above, the magnetic field generated by current flowing through the HTS coil 100 decreases the resistance of the magnetoresistive layer 407 substantially. This decreased resistance means that only a relatively small increase in temperature is required before the electrical resistance of the magnetoresistive layer 407 is low enough to allow current to transfer between adjacent turns 401A,B during or after hotspot formation. The magnetoresistance of the layer 407 therefore helps to prevent excessive localised heating before the current can be substantially diverted away from a hotspot. This behaviour can be contrasted with the behaviour of non-magnetoresistive materials, which may require a comparatively larger increase in temperature before the resistance of the material is sufficiently low for significant current transfer between adjacent turns to take place.

In the embodiment shown in Figure 4, each turn 401A,B has a single layer of HTS tape, but the coil 400 may also be formed from a cable comprising two or more layers of HTS tape 400 stacked in a face-to-face arrangement, so that each turn 401A,B comprises more than one layer of HTS tape. Preferably, the cable comprises HTS tapes arranged such that the HTS layers 103 are facing one another (i.e. the HTS layers 103 are between the respective hastelloy layers 101 of the HTS tapes 100).

Europium dicarbide has a resistivity of around 10⁶ Ohm cm at 20 K and around 10³ Ohm cm at 35 K. A hotspot that develops in the HTS tape will therefore initially tend to spread relatively slowly (e.g. at a speed of around 10 to 50 cm/s) around a turn 401A,B as the turn-to-turn resistance provided by the EuC₂ layer 407 remains relatively high. This means that the electrical current continues to flow through the turn and the magnetic field generated by the coil 400 remains approximately constant at around 20 T. As the temperature of the hotspot increases, the temperature of the EuC₂ layer 407 increases, reducing its resistivity, e.g. to around 10 Ohm cm at around 70K. The lower resistance of the EuC₂ layer 407 allows a significant amount of electrical current to pass radially from the turn 401A,B in which the hotspot has formed, through the insulator tape 403 and into one or more adjacent turns 401A,B of the HTS tape. The portions of these turns near the hotspot then exceed critical current and turn normal themselves. The hotspot is therefore able to expand radially across the coil 200 (i.e. in a direction perpendicular to both the Z-axis and a tangent to one or more of the turns) before a quench occurs.

By contrast with other metal insulator transitions (MIT) materials such as vanadium oxide (e.g. V₂O₃), the decrease in electrical resistivity in europium dicarbide is not confined to a narrow temperature range and starts at lower temperatures, in particular, temperatures around 15-25 K, where the best compromise between cooling cost and conductor cost occurs for REBCO-based magnets. In particular, europium dicarbide has a phase transition temperature of around 15 K, which is significantly lower than that of other metal insulator transition materials, with the phase transition occurring from a metallic phase below the transition temperature to an insulator or semiconductor phase above the transition temperature. The electrical resistivity of the europium dicarbide in this latter phase decreases markedly with increasing temperature, as discussed above. Consequently, turn-to-turn current leakage occurs more rapidly with europium dicarbide after the generation temperature is exceeded (and the HTS material transitions from the superconductor state to the normal state). This allows the europium dicarbide layer 407 to have a better "braking" effect on the rising hotspot temperature than e.g. vanadium oxide. Whilst the disclosure in this section of the application has focussed on europium dicarbide, other magnetoresistive materials could be used (depending on the generation temperature of the HTS material). For example, other carbides, oxides or even nitrides of other rare earth elements or transition materials may be suitable insulator materials in some cases.

### Quench Protection

As described above, partially insulated coils provide a way of reducing the heat generated in the vicinity of hotspots by reducing the resistance of the insulation between turns, so that current can bypass a turn with a hotspot by flowing radially into adjacent turns. Therefore, if the magnet has partial insulation between turns, the rate at which the temperature of a local "hotspot" (normal zone) rises is significantly reduced because current can transfer between turns as well as between tapes in one turn. This reduction allows significantly more time to detect the hotspot and take protective action before a potentially damaging quench occurs.

When the presence of a growing local hotspot is detected in a non-insulated or partially insulated magnet the sequence of events is different from those that occur in a fully insulated coil. The option of non-insulation is only applicable to coils with very low inductance. This is because the charge (or ramp) time of the magnets is determined by the ratio of the inductance of the superconducting spiral path to the resistive radial path, the L/R time constant. The radial resistance R depends on the inverse of magnet dimension (e.g. the length of the turn), whereas L scales as the cube of magnet dimensions, hence L/R scales as the fourth power of linear magnet dimension. Inductance can be reduced by choosing to operate at very high transport current, I₀, but there is a practical limit (~100 kA) to this approach because the current leads connecting the cryogenic coil to the room-temperature power supply become too large (leading to an unacceptable heat leak). In the case of a tokamak, the L/R time constant of non-insulated TF coils would be too long to ramp the magnet in a practical timeframe, even if a very high transport current were used. In practice, a compromise must be found between a reasonable ramp time (requiring higher R) and slowing the rate of hotspot temperature rise to allow a reasonable detection window (requiring lower R). Finding the appropriate compromise value for R (call this R_{c}) requires complex modelling using a thermal-electric network model that takes account of critical current in each element.

The shutdown generally involves disconnecting the power supply and redirecting the magnet current via a resistive shunt external to the magnet, to absorb and dissipate the energy stored in the magnetic field. The rate of hotspot heating falls rapidly as the magnet energy is discharged to the external dump. The magnet designer has to ensure that the peak temperature of the hotspot will not exceed the maximum allowed temperature (normally chosen to be 100 K, or at most 200K), to avoid excessive differential thermal stress. This typically involves designing a quench protection system to detect the hotspot and activate an energy dump within a fixed time window (typically less than a second in an HTS magnet). The stored energy depends on the size and shape of the magnet (being proportional to the integral of the square of magnetic flux over volume).

Partial insulation has the further advantage that it allows current to divert from the turn containing the hotspot at all points around the turn, not just at the location of the hotspot. When the presence of a hotspot is detected and a magnet dump is initiated this causes distributed heating around the whole turn, leading to a faster and better-distributed propagation of the magnet quench. This is of particular importance in magnets in which the local magnetic field value, field angle or temperature vary at different points around the coil, changing the critical current, I_{c}. This is the case with TF coils in a tokamak. When the dump phase is activated, the quench will start at the point where I₀/Ic is highest, and needs to propagate fast to avoid a local burn-out. Hence, the distributed heating around the turn afforded by partial insulation is an important feature.

The behaviour of a non- or partially-insulated magnet when the power supply unit (PSU) is disconnected and/or replaced with a dump resistance R_{d} is complex. Each turn is connected in series with the next turn, closely magnetically coupled to all other turns, and connected back on itself by Rtt, forming a shorted loop. Therefore, current in the turn in the simple case of an axi-symmetric coil, where all points around the circumference of each turn are at nominally equal I₀/I_{c}, the inductance current in each turn will connect back to the turn via the turn-turn resistance, Rtt. The coil therefore behaves like a set of nested, resistive loops, with high mutual inductance. The Joule heating caused by current flowing in Rtt in each loop will cause each turn to become quenched with slightly different timing. A normal "shockwave" will propagate radially, inwards and outwards, until the whole coil is quenched. It is important to note that the effective inductance of the magnet is significantly reduced in this mode. This means that the voltage developed across the coil is also substantially reduced compared to a quenching insulated coil with the same dimensions and amp-turns, by a factor roughly equal to 1/N, where N is the number of turns. This behaviour offers a number of very significant advantages for superconducting magnets, such as reduced ground wrap breakdown insulation voltage rating (useful in a nuclear device where organic insulators degrade in effectiveness due to neutron exposure).

A potential disadvantage of partial insulation that has a nominally fixed turn-turn resistance value, is that it becomes impossible to divert all of the magnet's stored energy to an external resistor when a dump is initiated. If the PSU is disconnected and an external dump resistor, R_{d}, is connected across the coil terminals, R_{d} appears in parallel to the radial resistance R. Hence magnet current splits between R and R_{d}. Energy dissipated in R heats the magnet cold mass, while energy dissipated in R_{d} is dissipated outside the magnet. In some cases, it is difficult to find a compromise value R_{c} that simultaneously satisfies all the constraints.

This problem can be mitigated if the value of the turn-turn resistance of the partial insulation can be made to vary significantly with temperature and/or magnetic field, e.g. the partial insulation described above with reference to insulator tapes 203, 303, 403. The turn-turn surface resistivity, ρ, is simply the radial resistance, R, divided by the number of turns in the coil and multiplied by the area of one turn. If we denote ρ_{c} as the surface resistivity for the compromise R_{c} achieved with temperature and magnetic field insensitive insulation, then it is particularly beneficial if ρ > ρ_{c}) when the local coil temperature T < T_{c}, and ρ < ρ_{c} when T > T_{c}. This arrangement facilitates sharing of current between turns only in the vicinity of the hotspot, which achieves the aim of slowing the rate of temperature rise in the hotspot without compromising the ramping time of the magnet. It also allows most of the magnet energy to be dumped into an external resistor rather than a significant proportion being dumped in the magnet, potentially causing it to overheat in the dump phase. This reduces overall magnet risk and also reduces the time needed to recover from a protection dump (because the magnet needs less time to re-cool before re-ramping).

We now consider the use of HTS field coils, such the HTS field coils 200, 400 described above in relation to Figures 2 and 4 (and also field coils formed using the insulator tape 300 described in connection with Figure 3), in tokamak fusion reactors and plasma chambers, particularly in spherical tokamaks. A tokamak has two sets of magnets: poloidal field coils, which are aligned to produce a poloidal field and are generally circular; and toroidal field coils, which comprise a central column and a plurality of return limbs, and are arranged to produce a toroidal field. HTS magnets can be used for either set of field coils, but are particularly useful for toroidal field coils in small tokamaks, as such field coils have tight space limitations. The improved current density and/or reduced cooling requirements of HTS can help significantly with such limitations.

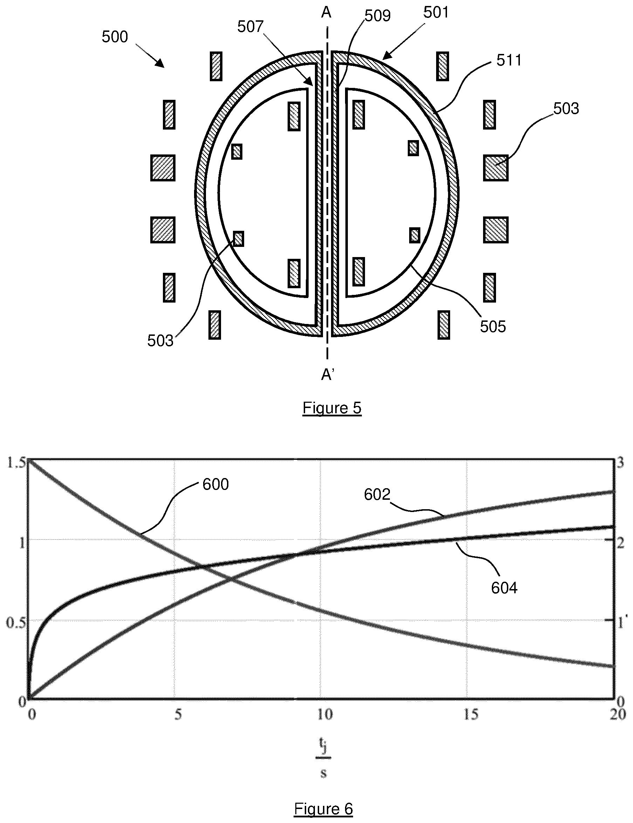

Figure 5 shows a vertical cross section through a spherical tokamak 500 comprising toroidal field (TF) coils 501, poloidal field (PF) coils 503 and a toroidal plasma chamber 505 located within the toroidal field coils 501. The tokamak 500 also comprises a central column 507, which extends through the centres of the plasma chamber 505 and the toroidal 501 and poloidal 503 field coils. Each of the generally D-shaped toroidal field coils 501 comprises turns arranged such that each coil 501 has a "straight" section 509 that extends along the axis A-A' of the central column 507 and a curved section 511 that is electrically connected to either end of the straight section 509 to form the D-shape coil. In practice, the straight section 509 may be slightly curved, e.g. with a radius of curvature that is greater (e.g. more than twice, five times or ten times larger) than the radius of curvature of the curved section 511.

Conventionally, toroidal field coils 503 may include extra copper material (in addition to the copper cladding of the HTS tape 100) to temporarily carry the heat generated in a normal zone formed in the HTS tape 100. The thicker the copper layer, the slower the rate of temperature rise in the hotspot (i.e. the section of tape containing the normal zone). If there is no hotspot, all transport current flows in the superconducting layer with no current in the copper layer. The latter only carries current for a brief period when the hotspot forms. If the local cooling is inadequate to stabilize the hotspot temperature, a thermal runaway will occur, ultimately resulting in the copper layer melting, and an arc forming. The time taken for this to occur can be extended by making the copper layer thicker, but this carries several penalties: reduced current density in the HTS cable (a critical factor in tokamak size), and reduced composite Young's modulus of the cable due to the relatively very low modulus of high purity copper compared to Hastelloy. However, the thickness of this extra copper material may be reduced, or the copper material may be removed entirely, if the insulator tapes such as those described above (e.g. insulator tapes 207, 407) are used. More compact, higher current density TF coils are therefore possible.

Considering the TF coils 501, the magnetic energy stored in a TF coil 501 may be several GJ. If a hotspot is detected then, in the case of insulated coils, this energy may be dumped to an external resistor (preferably a varistor) when the power supply unit powering the insulated TF coil 301 disconnected. Assuming the external resistor has a resistance of 0.167 Ohm and the maximum voltage drop across the TF coil 501 is 5 kV, then the time constant associated with removing energy from the TF coil 501 is around 20 s, and the overall dumping process may take of the order of 100 s. This timescale may be too long to prevent the hotspot from damaging the HTS tape 100.

Figure 6 is a graph showing the results of a calculation of the magnetic energy stored in a TF coil 501 during a quench. The TF coil 501 includes leaky insulator tape 407 and HTS tape 100 as described above for HTS field coil 400, with the following parameters:
- Europium dicarbide layer 407 thickness: 20 microns
- Substrate 105 thickness: 100 microns
- Insulator tape 403 width (i.e. length along the coil axis): 12 mm
- Turn circumference (length): 16 m
- Transport current: 30 kA
- Number of HTS tapes: 43
- Thickness of HTS tape: 110 microns
- Current per tape: 700 A
- Stored energy: 1.5 GJ
- Inductance 3.3 H

The graph has a curve 600 showing the decay in magnet energy and a curve 602 showing the rise in the energy dissipated in the external resistor over time (in seconds). These curves 600 and 602 are associated with the left-hand vertical axis, which has units of GJ. Another curve 604 shows the energy dissipated internally in the TF coil 501 over time and is associated with the right-hand axis, which has units of kJ. Most of the energy previously stored in the magnetic field is dissipated in the external resistance during a time of around 20 s. The energy dissipated in the TF coil 501 reaches only around 2 kJ at this time.

Figure 6 is a graph showing the results of a calculation of the temperature (in K) of the HTS tape 100 and leaky insulator tape 407 in the region of a hotspot (of initial length 1 cm) as a function of time (in milliseconds). The temperature of the insulator tape 407 (line 500) rises from around 25 K initially to around 150 K after around 40 ms, whilst the temperature of the HTS tape 100 (line 502) increases from around 25 K to around 50 K in this time.

The external resistor may be a varistor (voltage dependent resistor) to allow the external resistance to be varied over time to control the proportion of energy dissipated from the TF coil 501 in the varistor and in the magnet cable and EuC₂ insulation (or another insulating material, as described above). Alternatively or additionally, the external resistor may be initially disconnected from the TF coil 501 and then connected a short time after a hotspot has formed (so that electrical current then flows from the TF coil through the external resistor). This provides a way of providing a very high (effectively infinite) resistance initially and then a lower (finite) resistance after hotspot formation. More generally, the external resistor may comprise a plurality of resistors arranged in parallel with one another that can each be connected or disconnected from the other resistors using a respective switch, such that the overall resistance across the plurality of resistors can be varied by switching each of the switches. A quench detection system for initiating the energy dissipation after detection of a loss of superconductivity in the HTS material of at least a portion of one of the turns of the HTS field coil is described in WO2018/078327, for example.

Another way to reduce the peak coil temperature, which may be used in combination with using an external resistor (such as a varistor) as described above, is to couple the magnet current inductively into a secondary coil that is tightly inductively (magnetically) coupled to the magnet coil. Such a secondary coil may be referred to as a "close coupled secondary" (CCS) coil. In this method, the secondary coil is typically a single turn of normal metal, such as copper or aluminium. The two coils act as a transformer. During slow ramping of the primary coil, current is induced in the secondary coil, but decays quickly because it is resistive. However, if the primary coil turns fully (or mostly) normal, the collapsing magnetic field induces current in the secondary coil. The effect is for current to rapidly transfer (or "jump") from the primary coil to the secondary coil, reducing the heating in the hotspot in the primary coil. This method requires the flux coupling coefficient, k, between the primary and secondary coils to be very high (>0.9), meaning the coils have to be in very close proximity so that most of the flux generated by the primary coil links the secondary coil.

This protection method may be suitable for LTS magnets, which have fast normal zone propagation, but it is not generally suitable for use in insulated HTS coils, which display very slow normal zone propagation. However, the partially insulated HTS coils 200, 400 described above (and other field coils comprising the insulator tape 300 described above), allow the normal zone to propagate much faster, which makes quench protection using a CCS coil much more viable.

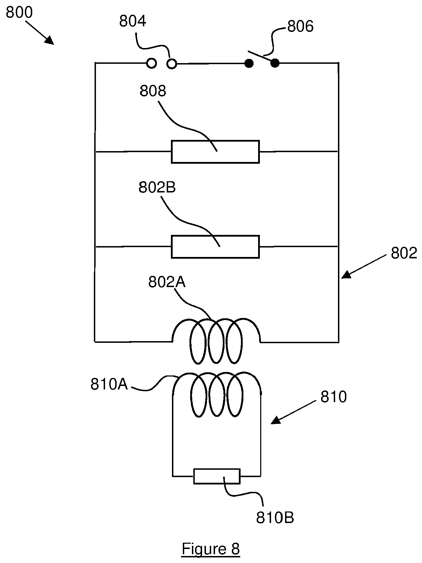

Figure 8 shows a quench protection circuit 800 for dissipating the energy of a superconducting field coil 802 following loss (or partial loss) of superconductivity within the HTS material of the field coil 802. The field coil 802 comprises turns of HTS tape wound about an axis to create a spiral path for electrical current supplied to the field coil 802. When the coil is in use, circulation of the electrical current around the spiral path of the turns generates a magnetic field. The field coil 802 is partially insulated, i.e. the turns of the coil are electrically connected to one another radially. This is achieved by providing the field coil 802 with electrical conductor elements (such as copper bridges 205A-C) or conductive "tracks" that extend through a layer of insulator material located between the turns to provide electrically conductive pathways from one turn to an adjacent turn. The field coil 802 may, for example, be a field coil 200, 300 as described above in connection with Figures 2, 3A, and 3B. When the resistance of the spiral path increases as a result of a hotspot forming, at least some of the electrical current circulating in the coil 802 is therefore able to flow radially into an adjacent turn and bypass the affected part of the turn.

The field coil 802 is represented in the circuit diagram by an inductor 802A and a resistor 802B. Electrical current flowing through the inductor 802A corresponds to electrical current flowing around the spiral path provided by the turns of the field coil 802, whereas electrical current flowing through the resistor 802B corresponds to electrical current flowing radially between two or more turns of the field coil 802. When the coil 802 is fully superconducting, the electrical current flows predominantly around the spiral path of the coil 802. When the coil 802 ceases superconducting, the resistance of the spiral path increases such that the electrical current flows preferentially radially between the turns. In this case, the resistance of the resistor 802B in Figure 8 corresponds, to a first approximation, to the number of turns of the field coil 802 multiplied by the turn-to-turn or "radial" resistance between pairs of adjacent turns, i.e. the combined resistance of the conductor elements (such as copper bridges 205A-C) connecting adjacent turns.

The quench protection circuit 800 further comprises a power supply 804 for supplying electrical current to the field coil 802. A circuit breaker 806 is provided to allow the power supply 804 to be disconnected in the event of a hotspot forming within the field coil 802. The circuit breaker may preferably be operated automatically by a quench detection system as described above. A dump resistor 808, preferably a varistor, is connected across the power supply 804 and circuit breaker 806, in parallel with the field coil 802. The dump resistor 808 may be thermally decoupled from the field coil 802 such that heat generated within the dump resistor 808 does not lead to any (or at most minimal) heating of the field coil 802.

The quench protection circuit 800 also comprises (in this example) a close-coupled secondary (CCS) coil 810 that is represented in Figure 8 by an inductor 810A and a resistor 810B. The CCS coil 810 is inductively coupled to the field coil 802 such that a change in the magnetic field produced by the field coil 802 induces an electrical current within the CCS coil 810.

When the field coil 802 is in use, the circuit breaker 806 is initially closed so that electrical current is supplied to the superconducting field coil 802 from the power supply 804. As described above, formation of a "hotspot" caused by loss of superconductivity within a portion of one or more turns of the coil causes some of the electrical current to flow radially from the affected turn to the neighbouring turn or turns (e.g. via copper bridges 205A-C (or other such bridges made of a resistive material other than copper) in the field coil). When a hotspot is detected, the power supply 804 is disconnected by opening the circuit breaker 806. Electrical current may then flow from the field coil 802 (i.e. from the inductor 802A) and through the dump resistor 808. However, at least some of the electrical current from the field coil 802 is able to flow back into the field coil 802 by flowing radially between the turns of the coil. This current corresponds in Figure 8 to the electrical current flowing from the inductor 802A, through the resistor 802B, and back to the inductor 802A. The proportion of the current that flows along this path (i.e. through the resistor 802B) depends inversely on the resistance of the dump resistor 808 relative to the resistance of the resistor 802B. The resistance of the dump resistor 808 is selected such that enough of the electrical current flows radially between the turns of the coil 802 (i.e. through resistor 802B in Figure 8) to heat the conductor elements (e.g. copper bridges 205A-C) in order to cause more of the HTS material in the coil 802 to turn normal (e.g. as described above). For example, the resistance of the dump resistor 808 may be larger than the resistance of the resistor 802B (at least initially), such that a significant proportion (e.g. more than 10% or more than 50%) of the electrical current flows radially between two or more of the turns of the field coil 802. This radial or "turn-to-turn" electrical current heats the conductor elements, causing their temperature to rise and their resistivity to increase. In general, the conductor elements have relatively low electrical resistance at the operating temperature of the HTS field coil 802, but much higher resistance at higher temperatures. For example, when the conductor elements are made of copper, the turn-to-turn resistance of the field coil 802 may increase by around a factor of 15 when the temperature is increased from 20 K to 200K.

As the turn-to-turn (radial) resistance of the field coil 802 increases, a greater proportion of the electrical current flows out of the coil 802 to the dump resistor 808, thereby reducing the amount of heating provided to the coil 802. As the dump resistor 808 can be configured to dissipate heat effectively (e.g. by attaching it to a heat sink or providing high rates of cooling), any rise in temperature of the dump resistor 808 can be minimised or otherwise constrained to an acceptable range. Thus, the heating of the conductor elements by the turn-to-turn current creates a form of negative feedback in which the level of heating of the conductor elements is reduced as a result of the increased turn-to-turn resistance of the coil 802 relative to the resistance of the dump resistor 802. This process avoids the conductor elements (e.g. copper bridges 205A-C) in the coil 802 from being "burned out" by the electrical current, whilst still allowing rapid heating of the coil 802 following hotspot formation. The duration and magnitude of the heating pulse may be optimised so that the turns of the coil 802 are heated above the generation temperature of the HTS material as rapidly as possible, whilst ensuring that the temperature of the conductor elements does not exceed a threshold value.

Preferably, the resistance of the dump resistor 808 varies with time in order to further limit the electrical current flowing between the windings of the coil 802 (i.e. through resistor 802B). This may be accomplished by, for example, by using a varistor as the dump resistor 808, with the varistor being configured such that its resistance decreases as the voltage across coil 802 increases following hotspot formation. Suitable varistors are available from Metrosil^{™}, for example.

In response to the heating caused by the radial electrical current and the hotspot, more of the HTS material in the coil turns normal (i.e. becomes non-superconducting) and the electrical current circulating around the turns of the field coil 802 decays, leading to a collapse of the magnetic field generated by the coil 802. As this happens, energy is transferred inductively from the field coil 802 to the CCS coil 810 and is ultimately dissipated in the resistor 810B of the CCS coil 810 circuit. The dump resistor 808 and the CCS coil 810 therefore act in a synergistic way to dissipate the electromagnetic energy stored in the field coil 802 efficiently. In particular, by limiting the turn-to-turn electrical current, the dump resistor 808 prevents the temperature of the field coil 801 from increasing too much before significant inductive transfer of energy to the CCS coil 810 can occur. Conversely, the rate at which the field coil 802 is heated further decreases as energy is transferred to the CCS coil 810, further limiting the temperature increase of the field coil 802 to an acceptable level.

The above disclosure can be applied to a variety of HTS magnet systems. In addition to the tokamak fusion reactor mentioned above as an example, it may be used for HTS coils in nuclear magnetic resonance imaging (NMR / MRI) devices, manipulation of magnetic devices within a non-magnetic medium via magnetic fields (e.g. robotic magnetic navigation systems for manipulating medical devices within a patient), and magnets for electric motors, e.g. for electronic aircraft. As a further example, the disclosure may be applied to proton beam therapy (PBT) devices comprising HTS magnet systems which include the disclosed features, where the HTS magnet systems are used within the accelerator of the PBT device, the quadrupole or dipole steering magnets of the PBT device, or any other magnet of the PBT device.

While various embodiments of the present invention have been described above, it should be understood that they have been presented by way of example, and not limitation. It would be apparent to one skilled in the relevant art(s) that various changes in form and detail could be made therein without departing from the scope of the invention.

## Claims

1. A high temperature superconductor, HTS, field coil (400) having turns (401A, 401B) comprising HTS material (103) wound about an axis (Z) of the coil, the turns being separated from one another along a direction perpendicular to the axis by one or more layers (407) comprising magnetoresistive material; and
**characterised by** the magnetoresistive material having an electrical resistivity that, at a temperature less than a generation temperature of the HTS material (103), decreases in response to an applied magnetic field, whereby the electrical resistance between the turns along the direction perpendicular to the axis decreases as electrical current is supplied to the coil.

2. An HTS field coil according to claim 1, wherein the magnetoresistive material is or comprises europium dicarbide, EuC₂.

3. An HTS field coil according to claim 1 or 2, wherein the magnetoresistive material has a first, metallic phase at a temperature below a phase transition temperature and a second, insulator or semiconductor phase at a temperature above the phase transition temperature, the phase transition temperature being less than the generation temperature of the HTS material.

4. An HTS field coil according to any one of claims 1 to 3, wherein the temperature at which the magnetoresistive material has an electrical resistivity that decreases in response to an applied magnetic field is greater than the phase transition temperature.

5. An HTS field coil according to claim 3 or 4, wherein the magnetoresistive material has a first resistivity at a temperature less than the generation temperature of the HTS material and a lower resistivity at a second temperature greater than the generation temperature of the HTS material.

6. An HTS field coil according to any one of claims 3 to 5, wherein the turns are formed from one or more lengths of HTS tape (100) comprising the HTS material as a layer on a flexible substrate (101).

7. An HTS field coil according to claim 6, wherein each layer (207, 407) comprising the magnetoresistive material is provided on a flexible substrate (405) that is co-wound about the axis of the coil with the one or more lengths of HTS tape (100).

8. A high temperature superconductor, HTS, cable for winding into an HTS field coil, the cable having a stack of layers comprising a flexible substrate, a layer of HTS material and a layer of magnetoresistive material, and **characterised by** the magnetoresistive material having an electrical resistivity that, at a temperature less than a generation temperature of the HTS material, decreases in response to an applied magnetic field.

9. An electromagnet comprising one or more HTS field coils (400) according to any one of claims 1 to 7.

10. A system comprising a plasma vessel and a set of field coils for generating a magnetic field within the plasma vessel, each field coil being an HTS field coil (400) according to any one of claims 1 to 7.

11. A tokamak fusion reactor (500) comprising an HTS field coil according to any one of claims 1 to 7, wherein the HTS field coil (400) is one of a toroidal field coil or a poloidal field coil.

12. A high temperature superconductor, HTS, magnet system comprising:
a high temperature superconductor, HTS, field coil (400) according to any one of claims 1 to 7;
a detection unit configured to detect a loss of superconductivity in the HTS material of at least a portion of one of the turns of the HTS field coil;
a quench protection unit configured to transfer electrical current from the HTS field coil to an external resistive load in response to said detection.

13. An HTS magnet system according to claim 12, wherein the external resistive load is a varistor.

14. A method of protecting a high temperature superconductor, HTS, field coil (400) according to any one of claims 1 to 7 from damage following a loss of superconductivity in one or more of turns of the HTS field coil, the method comprising:
detecting a loss of superconductivity in the HTS material of at least one of the turns of the HTS field coil; and
electrically connecting the HTS field coil to an external resistive load in response to said detection.

## Patentansprüche

1. Hochtemperatur-Supraleiter-Feldspule (HTS-Feldspule) (400), welche Windungen (401 A, 401 B) aus HTS-Material (103) aufweist, die um eine Achse (Z) der Spule gewickelt sind, wobei die Windungen entlang einer Richtung senkrecht zur Achse durch eine oder mehrere Schichten (407) voneinander getrennt sind, die magnetoresistives Material umfassen; und
**dadurch gekennzeichnet, dass** das magnetoresistive Material einen elektrischen spezifischen Widerstand aufweist, welcher, bei einer Temperatur unterhalb der Erzeugungstemperatur des HTS-Materials (103), als Reaktion auf ein angelegtes Magnetfeld abnimmt, wodurch der elektrische Widerstand zwischen den Windungen entlang der Richtung senkrecht zur Achse abnimmt, wenn der Spule ein elektrischer Strom zugeführt wird.

2. HTS-Feldspule nach Anspruch 1, wobei das magnetoresistive Material Europiumdicarbid, EuC₂ ist oder umfasst.

3. HTS-Feldspule nach Anspruch 1 oder 2, wobei das magnetoresistive Material eine erste metallische Phase bei einer Temperatur unterhalb einer Phasenübergangstemperatur und eine zweite isolierende oder halbleitende Phase bei einer Temperatur oberhalb der Phasenübergangstemperatur aufweist, wobei die Phasenübergangstemperatur kleiner als die Erzeugungstemperatur des HTS-Materials ist.

4. HTS-Feldspule nach einem der Ansprüche 1 bis 3, wobei die Temperatur, bei der das magnetoresistive Material einen elektrischen spezifischen Widerstand aufweist, der als Reaktion auf ein angelegtes Magnetfeld abnimmt, größer ist als die Phasenübergangstemperatur.

5. HTS-Feldspule nach Anspruch 3 oder 4, wobei das magnetoresistive Material einen ersten spezifischen Widerstand bei einer Temperatur unterhalb der Erzeugungstemperatur des HTS-Materials und einen niedrigeren spezifischen Widerstand bei einer zweiten Temperatur oberhalb der Erzeugungstemperatur des HTS-Materials aufweist.

6. HTS-Feldspule nach einem der Ansprüche 3 bis 5, wobei die Windungen aus einem oder mehreren Längen von HTS-Band (100) gebildet sind, die das HTS-Material als Schicht auf einem flexiblen Substrat (101) umfassen.

7. HTS-Feldspule nach Anspruch 6, wobei jede Schicht (207, 407), die das magnetoresistive Material umfasst, auf einem flexiblen Substrat (405) bereitgestellt ist, das mit der einen oder mehreren Längen von HTS-Band (100) um die Achse der Spule gewickelt ist.

8. Hochtemperatur-Supraleiterkabel (HTS-Kabel) zum Wickeln zu einer HTS-Feldspule, wobei das Kabel einen Schichtstapel aufweist, der ein flexibles Substrat, eine Schicht aus HTS-Material und eine Schicht aus magnetoresistivem Material umfasst, und **dadurch gekennzeichnet ist, dass** das magnetoresistive Material einen elektrischen spezifischen Widerstand aufweist, der bei einer Temperatur unterhalb der Erzeugungstemperatur des HTS-Materials als Reaktion auf ein angelegtes Magnetfeld abnimmt.

9. Elektromagnet, umfassend eine oder mehrere HTS-Feldspulen (400) nach einem der Ansprüche 1 bis 7.

10. System, umfassend ein Plasmagefäß und einen Satz von Feldspulen zur Erzeugung eines Magnetfelds innerhalb des Plasmagefäßes, wobei jede Feldspule eine HTS-Feldspule (400) nach einem der Ansprüche 1 bis 7 ist.

11. Tokamak-Fusionsreaktor (500) mit einer HTS-Feldspule nach einem der Ansprüche 1 bis 7, wobei es sich bei der HTS-Feldspule (400) um eine toroidale Feldspule oder eine poloidale Feldspule handelt.

12. Hochtemperatur-Supraleiter-Magnetsystem (HTS-Magnetsystem), umfassend:
eine Hochtemperatur-Supraleiter-Feldspule (HTS-Feldspule) (400) nach einem der Ansprüche 1 bis 7;
eine Detektionseinheit, die so konfiguriert ist, dass sie einen Verlust der Supraleitung im HTS-Material von mindestens einem Teil einer der Windungen der HTS-Feldspule detektiert;
eine Quench-Schutzeinheit, die so konfiguriert ist, dass sie als Reaktion auf die Detektion, elektrischen Strom von der HTS-Feldspule an eine externe ohmsche Last überträgt.

13. HTS-Magnetsystem nach Anspruch 12, wobei die externe ohmsche Last ein Varistor ist.

14. Verfahren zum Schutz einer Hochtemperatur-Supraleiter-Feldspule (HTS-Feldspule) (400) nach einem der Ansprüche 1 bis 7 vor Beschädigung infolge eines Verlusts der Supraleitung in einer oder mehreren der Windungen der HTS-Feldspule, wobei das Verfahren umfasst:
Detektieren eines Verlusts der Supraleitung im HTS-Material mindestens einer der Windungen der HTS-Feldspule; und
elektrisches Verbinden der HTS-Feldspule mit einer externen ohmschen Last als Reaktion auf die Detektion.

## Revendications

1. Bobine de champ supraconductrice à haute température (HTS) (400) présentant des spires (401 A, 401 B) comprenant du matériau HTS (103) enroulé autour d'un axe (Z) de la bobine, les spires étant séparées les unes des autres le long d'une direction perpendiculaire à l'axe par une ou plusieurs couches (407) comprenant un matériau magnétorésistif ; et
**caractérisée en ce que** le matériau magnétorésistif présente une résistivité électrique qui, à une température inférieure à une température de génération du matériau HTS (103), diminue en réponse à un champ magnétique appliqué, moyennant quoi la résistance électrique entre les spires le long de la direction perpendiculaire à l'axe diminue lorsque le courant électrique est fourni à la bobine.

2. Bobine de champ HTS selon la revendication 1, dans laquelle le matériau magnétorésistif est ou comprend du dicarbure d'europium, EuC₂.

3. Bobine de champ HTS selon la revendication 1 ou 2, dans laquelle le matériau magnétorésistif présente une première phase métallique à une température inférieure à une température de transition de phase et une seconde phase isolante ou semiconductrice à une température supérieure à la température de transition de phase, la température de transition de phase étant inférieure à la température de génération du matériau HTS.

4. Bobine de champ HTS selon l'une quelconque des revendications 1 à 3, dans laquelle la température à laquelle le matériau magnétorésistif présente une résistivité électrique qui diminue en réponse à un champ magnétique appliqué est supérieure à la température de transition de phase.

5. Bobine de champ HTS selon la revendication 3 ou 4, dans laquelle le matériau magnétorésistif présente une première résistivité à une température inférieure à la température de génération du matériau HTS et une résistivité plus faible à une seconde température supérieure à la température de génération du matériau HTS.

6. Bobine de champ HTS selon l'une quelconque des revendications 3 à 5, dans laquelle les spires sont formées à partir d'une ou plusieurs longueurs de ruban HTS (100) comprenant le matériau HTS comme couche sur un substrat flexible (101).

7. Bobine de champ HTS selon la revendication 6, dans laquelle chaque couche (207, 407) comprenant le matériau magnétorésistif est fournie sur un substrat flexible (405) qui est co-enroulé autour de l'axe de la bobine avec les une ou plusieurs longueurs de ruban HTS (100).

8. Câble supraconducteur à haute température (HTS) destiné à être enroulé dans une bobine de champ HTS, le câble présentant un empilement de couches comprenant un substrat flexible, une couche de matériau HTS et une couche de matériau magnétorésistif et **caractérisé en ce que** le matériau magnétorésistif présente une résistivité électrique qui, à une température inférieure à la température de génération du matériau HTS, diminue en réponse à un champ magnétique appliqué.

9. Électroaimant comprenant une ou plusieurs bobines de champ HTS (400) selon l'une quelconque des revendications 1 à 7.

10. Système comprenant une cuve à plasma et un ensemble de bobines de champ pour générer un champ magnétique à l'intérieur de la cuve à plasma, chaque bobine de champ étant une bobine de champ HTS (400) selon l'une quelconque des revendications 1 à 7.

11. Réacteur à fusion tokamak (500) comprenant une bobine de champ HTS selon l'une quelconque des revendications 1 à 7, dans lequel la bobine de champ HTS (400) est soit une bobine de champ toroïdal, soit une bobine de champ poloïdal.

12. Système magnétique supraconducteur à haute température (HTS) comprenant :
une bobine de champ supraconductrice à haute température (HTS) (400) selon l'une quelconque des revendications 1 à 7 ;
une unité de détection configurée pour détecter une perte de supraconductivité dans le matériau HTS d'au moins une partie d'une des spires de la bobine de champ HTS ;
une unité de protection contre les extinctions configurée pour transférer un courant électrique de la bobine de champ HTS vers une charge résistive externe en réponse à ladite détection.

13. Système magnétique HTS selon la revendication 12, dans lequel la charge résistive externe est une varistance.

14. Procédé de protection d'une bobine de champ supraconductrice à haute température (HTS) (400) selon l'une quelconque des revendications 1 à 7 contre des dommages consécutifs à une perte de supraconductivité dans une ou plusieurs spires de la bobine de champ HTS, le procédé comprenant :
la détection d'une perte de supraconductivité dans le matériau HTS d'au moins une des spires de la bobine de champ HTS ; et
la connexion électrique de la bobine de champ HTS à une charge résistive externe en réponse à ladite détection.
